(19) Europäisches Patentamt
European Patent Office
Office européen des brevets

(11) EP 1 213 581 A2

(12) # EUROPEAN PATENT APPLICATION

(43) Date of publication:
**12.06.2002 Bulletin 2002/24**

(51) Int Cl.7: **G01N 27/26**, G01N 27/30

(21) Application number: **01204258.6**

(22) Date of filing: **08.11.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.11.2000 US 252085 P**

(71) Applicant: **Delphi Technologies, Inc.**
**Troy, MI 48007 (US)**

(72) Inventors:
- **Detwiler, Eric J.**
  **Davison, MI 48423 (US)**
- **Valdes, Carlos A.**
  **Flint, MI 48507 (US)**

(74) Representative: **Denton, Michael John et al**
**Delphi Automotive Systems,**
**Centre Technique Paris,**
**117, avenue des Nations,**
**B.P. 60059**
**95972 Roissy Charles de Gaulle Cédex (FR)**

(54) **Gas sensor with selective reference electrode and method of making the same**

(57) A gas sensor comprises: an electrochemical cell comprising an electrolyte (30) disposed in ionic communication with a sensing electrode (20) and a reference electrode (22), wherein the reference electrode (22) comprises an inhibitor that reduces a first catalytic activity with selected sensing gas constituents without substantially affecting a second catalytic activity with oxygen; a heater disposed in thermal communication with the electrochemical cell; and at least one insulating layer (46) disposed in contact with the heater (50). Methods for making and using the gas sensor with a reference electrode (22) comprising an inhibitor are also disclosed.

Fig.1.

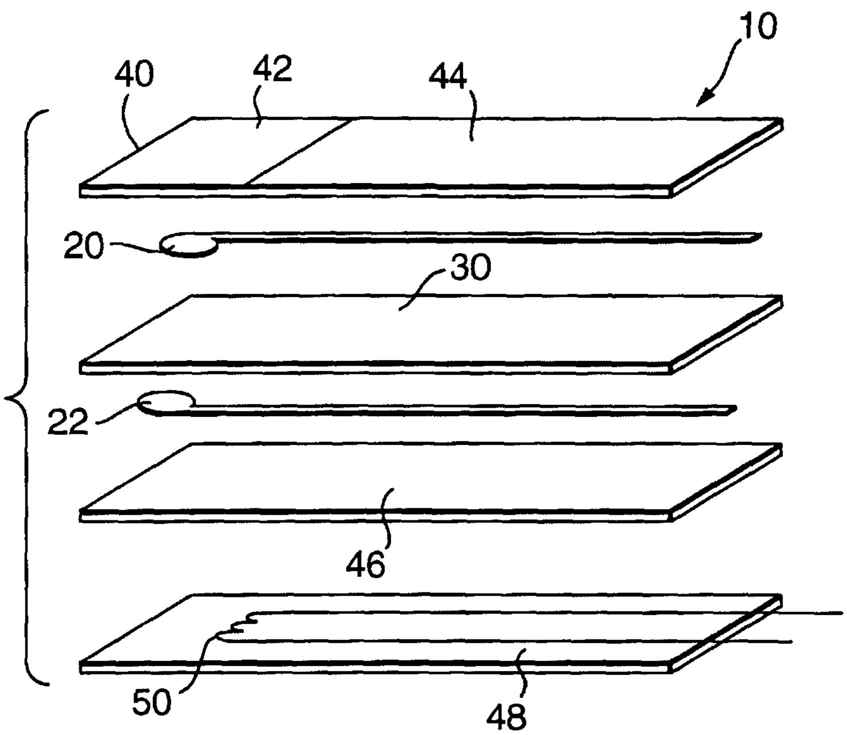


EP 1 213 581 A2

## Description

CROSS REFERENCE TO RELATED APPLICATION

This application claims the benefit of U.S. Provisional Application Serial No. 60/252,085 filed November 20, 2000, which is incorporated herein by reference.

TECHNICAL FIELD

The present disclosure relates to gas sensors, and more particularly to a selective reference electrode in an oxygen sensor.

BACKGROUND OF THE INVENTION

The automotive industry has used exhaust gas sensors in vehicles for many years to sense the composition of exhaust gases, namely, oxygen. For example, a sensor is used to determine the exhaust gas content for alteration and optimization of the air to fuel ratio for combustion.

One type of sensor uses an ionically conductive solid electrolyte between porous electrodes. For oxygen, solid electrolyte sensors are used to measure oxygen activity differences between an unknown gas sample and a known gas sample. In the use of a sensor for automotive exhaust, the unknown gas is exhaust and the known gas, (i.e., reference gas), is usually atmospheric air because the oxygen content in air is relatively constant and readily accessible. This type of sensor is based on an electrochemical galvanic cell operating in a potentiometric mode to detect the relative amounts of oxygen present in an automobile engine's exhaust. When opposite surfaces of this galvanic cell are exposed to different oxygen partial pressures, an electromotive force ("emf") is developed between the electrodes according to the Nernst equation.

With the Nernst principle, chemical energy is converted into electromotive force. A gas sensor based upon this principle typically consists of an ionically conductive solid electrolyte material, a porous electrode with a porous protective overcoat exposed to exhaust gases ("exhaust gas electrode"), and a porous electrode exposed to a known gas' partial pressure ("reference electrode"). Sensors typically used in automotive applications use a yttria stabilized zirconia based electrochemical galvanic cell with porous platinum electrodes, operating in potentiometric mode, to detect the relative amounts of a particular gas, such as oxygen for example, that is present in an automobile engine's exhaust. Also, a typical sensor has a ceramic heater attached to help maintain the sensor's ionic conductivity. When opposite surfaces of the galvanic cell are exposed to different oxygen partial pressures, an electromotive force is developed between the electrodes on the opposite surfaces of the zirconia wall, according to the Nernst equation:

$$E = \left(\frac{-RT}{4F}\right) \ln\left(\frac{P_{O_2}^{ref}}{P_{O_2}}\right)$$

where:

| | |
|---|---|
| E = | electromotive force |
| R = | universal gas constant |
| F = | Faraday constant |
| T = | absolute temperature of the gas |
| $p_{O2}^{ref}$ = | oxygen partial pressure of the reference gas |
| $P_{O_2}$ = | oxygen partial pressure of the exhaust gas |

Due to the large difference in oxygen partial pressure between fuel rich and fuel lean exhaust conditions, the electromotive force (emf) changes sharply at the stoichiometric point, giving rise to the characteristic switching behavior of these sensors. Consequently, these potentiometric oxygen sensors indicate qualitatively whether the engine is operating fuel-rich or fuel-lean, conditions without quantifying the actual air-to-fuel ratio of the exhaust mixture.

For example, an oxygen sensor, with a solid oxide electrolyte such as zirconia, measures the oxygen activity difference between an unknown gas and a known reference gas. Usually, the known reference gas is the atmosphere air while the unknown gas contains the oxygen with its equilibrium level to be determined. Typically, the sensor has a built in reference gas channel which connects the reference electrode to the ambient air. To avoid contamination of the reference air by the unknown gas, the sensor requires expensive sensor package that usually has complex features in order to provide sufficient gas sealing between the reference air and the unknown gas. Alternatively, in-situ electrochemical oxygen pumping can be used. In this method, the air reference electrode chamber is replaced by a sealed reference electrode with oxygen electrochemically pumped in from the exhaust gas. This method eliminates the exhaust gas contamination problem but creates its own drawbacks. That is, an expensive electronic circuit is required to do the electrochemical oxygen pumping.

What is needed in the art is a gas sensor that provides a method of sensing oxygen without expensive sealing methods or pumping circuitry.

SUMMARY OF THE INVENTION

Disclosed herein is a gas sensor and method of producing and using the same. The gas sensor comprises: an electrochemical cell comprising an electrolyte disposed in ionic communication with a sensing electrode and a reference electrode, wherein the reference electrode comprises an inhibitor that reduces a first catalytic activity with selected sensing gas constituents without substantially affecting a second catalytic activity with oxygen; a heater disposed in thermal communication with the electrochemical cell; and at least one insulating layer disposed in thermal communication with the heater.

The method of making the gas sensor comprises: disposing an electrochemical cell comprising an electrolyte in ionic communication with a sensing electrode and a reference electrode, wherein the reference electrode comprises an inhibitor that reduces a first catalytic activity with selected sensing gas constituents without substantially affecting a second catalytic activity with oxygen; disposing a heater in thermal communication with the electrochemical cell to form a sensor; and heating the sensor.

The method of using a gas sensor comprises: exposing a reference electrode and a sensing electrode to a sensing gas, wherein the reference electrode comprises an inhibitor that reduces a first catalytic activity with selected sensing gas constituents without substantially affecting a second catalytic activity with a reference gas; creating an electromotive force; and measuring the electromotive force.

The above discussed and other features and advantages will be appreciated and understood by those skilled in the art from the following detailed description and drawings.

## BRIEF DESCRIPTION OF THE DRAWINGS

The gas sensor will now be described, by way of example only, with reference to the accompanying drawings, which are meant to be exemplary, not limiting, and wherein like elements are numbered alike in several figures.

Figure 1 is an expanded side view of a gas sensor design.

Figure 2 is an expanded side view of another gas sensor design.

Figure 3 is a graphical representation of the sensing electrode activity when exposed to hydrogen.

Figure 4 is a graphical representation of the sensing electrode activity when exposed to carbon monoxide.

Figure 5 is a graphical representation of the sensing electrode activity when exposed to propane.

## DETAILED DESCRIPTION OF INVENTION

A gas sensor comprises an electrochemical cell having a sensing electrode in ionic communication with a reference electrode via an electrolyte. By doping the reference electrode with an inhibitor, the reference electrode can be rendered substantially, if not wholly, insensitive or blind to certain gaseous species. In other words, by including a sufficient amount of inhibitor in and/or on the reference electrode, the reference electrode can be rendered insensitive to a single species or group of species. As a result, contamination with the unknown gas becomes irrelevant because the reference electrode cannot "see" the unknown gases, only the reference gas. For example, by coating the reference gas with a sufficient amount of lead, the reference electrode becomes solely sensitive to oxygen. When exposed to exhaust gas, the reference electrode functions as if exposed to a pure oxygen stream. Consequently, the reference electrode can be disposed on the same side of the electrolyte as the sensing electrode, and can use the unknown gas (e.g., the same gas as that to be sensed (a common gas with the sensing electrode), such as the exhaust gas) as the reference gas.

Referring to Figure 1, the sensor element 10 is illustrated. Although a planar sensor design is illustrated, the sensor can be conical, or any known design. The sensing or sensing electrode 20 and the reference or reference electrode 22 are disposed on opposite sides of, and adjacent to, an electrolyte 30 creating an electrochemical cell (20/30/22). On the side of the sensing electrode 20 opposite electrolyte 30 is a protective insulating layer 40 having a dense section 44 and a porous section 42 that enables fluid communication between the sensing electrode 20 and the exhaust gas. Meanwhile, disposed on a second side of the reference electrode 22 is heater 50 for maintaining sensor element 10 at the desired operating temperature. Typically disposed in contact with the heater 50 are one or more insulating layers 46, with an additional protective layer 48 disposed on a side of heater 50 opposite insulating layer 46.

Referring to Figure 2, the sensor element 100 is illustrated. Sensor element 100 is illustrated with similar parts as sensor element 10, with the following deviations. Reference electrode 22 is disposed on the same side of electrolyte 30, physically separated from yet in ionic communication with sensing electrode 20. Therefore, the reference electrode 22 is directly exposed to the gas to be sensed.

In addition to the above sensor components, other components can be employed, including, but not limited to, protective coatings (e.g., spinel, alumina, magnesium aluminate, and the like, as well as combinations comprising at least one of the foregoing coatings), lead gettering layer(s), leads, contact pads, ground plane(s), support layer(s), additional electrochemical cell(s), and the like. The leads, which supply current to the heater and electrodes, are typically formed on the same layer as the heater/electrode to which they are in electrical communication and extend from the heater/electrode to the terminal end of the gas sensor where they are in electrical communication with the corresponding via (not shown) and appropriate contact pads (not shown).

Insulating layers 46, and protective layers 48, 40, provide structural integrity (e.g., protect various portions of the gas sensor from abrasion and/or vibration, and the like, and provide physical strength to the sensor), and physically separate and electrically isolate various components. These layer(s), which can be formed using ceramic tape casting methods or other methods such as plasma spray deposition techniques, screen printing, stenciling and others, can each be up to about 200 microns thick or so, with a thickness of about 50 microns to about 200 microns preferred. Since the materials employed in the manufacture of gas sensors preferably comprise substantially similar coefficients of thermal expansion, shrinkage characteristics, and chemical compatibility in order to minimize, if not eliminate, delamination and other processing problems, the particular material, alloy, or mixture chosen for the insulating and protective layers is dependent upon the specific electrolyte employed. Typically these layers comprise a dielectric material such as alumina, and the like.

Disposed between insulating layers, 46, and protective layer 48, is a heater 50 that is employed to maintain the sensor element at the desired operating temperature. Heater 50 can be any heater capable of maintaining the sensor end at a sufficient temperature to facilitate the various electrochemical reactions therein. The heater 50, which is typically platinum, aluminum, palladium, and the like, as well as oxides, mixtures, and alloys comprising at least one of the foregoing metals, or any conventional heater, is generally screen printed or otherwise disposed onto a substrate to a thickness of about 5 microns to about 50 microns.

The heater maintains the electrochemical cell (electrodes 20, 22 and electrolyte 30) at a desired operating temperature. The electrolyte 30 can be solid or porous, can comprise the entire layer or a portion thereof, can be any material that is capable of permitting the electrochemical transfer of oxygen ions, should have an ionic/total conductivity ratio of approximately unity, and should be compatible with the environment in which the gas sensor will be utilized (e.g., up to about 1,000°C). Possible electrolyte materials can comprise any material employed as sensor electrolytes, including, but not limited to, zirconia, and the like, which may optionally be stabilized with calcium, barium, yttrium, magnesium, aluminum, lanthanum, cesium, gadolinium, and the like, as well as combinations comprising at least one of the foregoing materials. For example, the electrolyte can be alumina and yttrium stabilized zirconia. Typically, the electrolyte, which can be formed by various processes (e.g., die pressing, roll compaction, stenciling and screen printing, tape casting techniques, and the like), has a thickness of up to about 500 microns or so, with a thickness of about 25 microns to about 500 microns preferred, and a thickness of about 50 microns to about 200 microns especially preferred.

It should be noted that the electrolyte 30 and porous section 42 can comprise an entire layer or a portion thereof; e.g., they can form the layer, be attached to the layer (porous section/electrolyte abutting dielectric material), or disposed in an opening in the layer (porous section/electrolyte can be an insert in an opening in a dielectric material layer). The latter arrangement eliminates the use of excess electrolyte and protective material, and reduces the size of gas sensor by eliminating layers. Any shape can be used for the electrolyte and porous section, with the size and geometry of the various inserts, and therefore the corresponding openings, being dependent upon the desired size and geometry of the adjacent electrodes. It is preferred that the openings, inserts, and electrodes have a substantially compatible geometry such that sufficient exhaust gas access to the electrode(s) is enabled and sufficient ionic transfer through the electrolyte is established.

The electrodes 20, 22, are disposed in ionic communication with the electrolyte 30. The electrodes can comprise any catalyst capable of ionizing oxygen, including, but not limited to, metals such as platinum, palladium, osmium, rhodium, iridium, gold, and ruthenium; metal oxides such as zirconia, yttria, ceria, calcia, alumina, and the like; other materials, such as silicon, and the like; and mixtures and alloys comprising at least one of the foregoing catalysts. As with the electrolyte, the electrodes 20, 22 can be formed using various techniques. Some possible techniques include sputtering, painting, chemical vapor deposition, screen printing, and stenciling, among others. If a co-firing process is employed for the formation of the sensor, screen printing the electrodes onto appropriate tapes is preferred due to simplicity, economy, and compatibility with the co-fired process. Electrode leads (not shown) and vias (not shown) in the insulating and/or electrolytes are typically formed simultaneously with electrodes.

In addition to comprising the above electrode materials, the reference electrode further comprises an inhibitor to render the reference electrode 22 gas-selective. Basically, the reference electrode 22 is doped (or "poisoned") with an inhibitor, which inhibits catalytic reactions with exhaust gas species, such as nitrogen oxides ($NO_x$), carbon monoxide (CO), hydrogen ($H_2$), carbon dioxide ($CO_2$), and hydrocarbons (HC), while still being reactive with oxygen. This removes the need to isolate the reference electrode by hermetic sealing or to provide oxygen via an air reference channel, since the reference electrode 22 cannot sense any gas species, but oxygen.

To achieve the gas selective behavior, reference electrode 22 can be doped or coated with any material capable of inhibiting, and preferably preventing, catalytic activity with unwanted species (e.g., $NO_x$, CO, $CO_2$, $H_2$, and HC), while not substantially affecting catalytic reactivity with a reference gas (e.g., oxygen ($O_2$)). As meant herein, "not substantially affecting the catalytic reactivity" means that the pumping current of a sensor comprising the inhibitor has a reactivity that is reduced by less than or equal to about 10% compared to the pumping current of a sensor without the inhibitor; i.e., the pumping current is affected by less than or equal to about 10%. Preferably, the pumping current is affected by less than or equal to about 5%, with the pumping current being affected by less than or equal to about 1% more preferred.

Inhibitors include, but are not limited to, lead, silver, copper, zinc, nickel, tin, and the like, as well as combinations comprising at least one of the foregoing inhibitors. The type and amount of inhibitor to be deposited on or combined with the reference electrode can be readily determined by one of ordinary skill in the art based upon catalytic activity of the electrode. Sufficient inhibitor should be employed to reduce the reactivity of the reference electrode (with respect to the unwanted species) by greater than or equal to about 50%, with greater than or equal to about 80% reactivity reduction preferred, greater than or equal to about 90% reactivity reduction more preferred, greater than or equal to about 95% reactivity reduction even more preferred, and 100% reactivity reduction (i.e., no measurable reactivity by current measuring techniques) especially preferred. In other words, due to the presence of the inhibitor, the catalytic activity of the reference electrode with respect to the unwanted species is less than or equal to about 10%, with less than or equal to about 5% preferred, and about 0% (i.e., no measurable reactivity by current measuring techniques) especially preferred. For example, greater than about $1 \times 10^{-21}$ atoms per cubic centimeter, or so, can be employed. If the inhibitor is disposed over the reference electrode, it typically has a thickness of greater than or equal to about 0.005 micrometers, with a thickness of greater than or equal to about 0.01 micrometers preferred. Also preferred is a thickness of less than or equal to about 0.1 micrometers. Some possible techniques for applying the inhibitor to the reference electrode include sputtering, chemical vapor deposition, electroplating, electroless plating, screen printing, painting, stenciling, mixing, and the like.

Now referring to Figures 3-5, rich and lean conditions for a standard sensor (with conventional electrodes lines 60, 70, and 80, respectively), is compared to three separate electrodes (62, 63, 64; 72, 74, 75; 86, 87, 88; respectively) coated with lead to inhibit their reactivity with respect to hydrogen, carbon monoxide, and propane, respectively. The amount of lead deposited on the reference electrodes was variable, typically having a thickness of about 0.01 micrometers to about 0.1 micrometers. As seen in the Figures, during rich conditions, the coated electrodes inhibited the hydrogen, carbon monoxide, and propane activity without affecting the ability of the doped electrodes to sense oxygen during lean conditions. The results indicate that, by coating or doping an electrode, the electrode reactivity with various species ($NO_x$, CO, $CO_2$, $H_2$, HC, etc.) can be inhibited, while maintaining reactivity to other species, namely oxygen. Consequently, if the reference electrode comprises the inhibitor, it can be exposed to the exhaust gas without affecting sensor performance. With the inhibitor, the reference electrode "sees" an essentially pure oxygen environment even though exposed to the exhaust gas; the electrode believes it is exposed to a 100% oxygen partial pressure.

The above discovery that inhibitor(s) can be employed to attain a controlled poisoning of the electrode enables numerous design changes and simplifications to the sensor. For example, the protective layer, hermetic seal and air channel can be eliminated, the reference electrode can be disposed on the same side of the electrolyte as the sensing electrode, thereby reducing cost, simplifying manufacture, and reducing size.

The sensor comprising the above-described components can be formed in any fashion such as co-firing or individual firing with subsequent assembly. For example, a green sensor can be formed comprising a sensing electrode and a reference electrode on one side of an electrolyte with a heater and appropriate insulating layers disposed on the opposite side of the electrolyte to form a green sensor. The green sensor is then fired to temperatures of up to about 1,550°C and cooled. Inhibitor(s) are then applied to the reference electrode, and the sensor is again heated preferably in an inert environment (e.g., under a flow of nitrogen, in a vacuum furnace, or the like) to a temperature sufficient to adhere (e.g., alloy, or the like) the inhibitor to the reference electrode; e.g., typically temperatures up to about 800°C, or so, for up to about one hour or so.

In an alternative embodiment, the various sensor components are formed and fired individually, namely the electrolyte, insulating layers, heater and protective layer. A reference electrode comprising inhibitor and a sensing electrode are then sputtered onto one side of an electrolyte with the appropriate leads. The components can then laid-up and heated to a sufficient temperature to adhere the electrodes to the electrolyte.

In yet another embodiment, a sensing electrode is disposed on one side of a densified porous electrolyte having a sufficient porosity to enable fluid communication between the inhibitor containing reference electrode disposed on the second side of the porous electrolyte and the environment surrounding the sensor (e.g., the exhaust gas). The electrolyte is then stacked with the remaining sensor components and heated.

In yet another embodiment, a sensing electrode and an inhibitor containing reference electrode are disposed on the same side of a densified porous electrolyte enabling direct communication of the reference electrode with the exhaust gas. The electrolyte is then stacked with the remaining sensor components and heated.

Employing a reference electrode comprising inhibitor enables a simplified sensor design, reduced manufacturing costs, and a smaller sensor. Since poisoning of the reference electrode, false readings due to the presence of contaminants, and the need for a separate reference gas, are eliminated, numerous, simplified sensor designs can be employed and are hereby contemplated.

While preferred embodiments have been shown and described, various modifications and substitutions may be made thereto without departing from the spirit and scope of the invention, including the use of the geometries taught herein in other conventional sensors. Accordingly, it is to be understood that the apparatus and method have been described by way of illustration only, and such illustrations and embodiments as have been disclosed herein are not to be construed as limiting to the claims.

## Claims

**1.** A gas sensor, comprising:

an electrochemical cell comprising an electrolyte (30) disposed in ionic communication with a sensing electrode (20) and a reference electrode (22), wherein the reference electrode (22) comprises an inhibitor that reduces a first catalytic activity with selected sensing gas constituents without substantially affecting a second catalytic activity with oxygen;
a heater (50) disposed in thermal communication with the electrochemical cell; and
at least one insulating layer (46) disposed in thermal communication with the heater.

**2.** The gas sensor of Claim 1, wherein the gas constituents are selected from the group consisting of carbon monoxide, nitrogen oxides, hydrogen, hydrocarbons, and combinations comprising at least one of the foregoing gas constituents.

**3.** The gas sensor of Claim 1, wherein the sensing electrode (20) and the reference electrode (22) are disposed on a first side of the electrolyte.

**4.** The gas sensor of Claim 1, wherein the reference electrode (22) and the sensing electrode (20) are disposed on opposite sides of the electrolyte (30), and wherein the sensing electrode (20) and the reference electrode (22) are in fluid communication with a common gas.

**5.** The gas sensor of Claim 1, wherein the electrolyte (30) is porous.

**6.** The gas sensor of Claim 1, wherein the electrolyte (30) is solid.

**7.** The gas sensor of Claim 1, wherein the inhibitor is selected from the group consisting of lead, silver, copper, nickel, zinc, tin, and combinations comprising at least one of the foregoing inhibitors.

**8.** The gas sensor of Claim 7, wherein the inhibitor is lead.

**9.** The gas sensor of Claim 7, wherein the inhibitor is silver.

**10.** The gas sensor of Claim 1, wherein the inhibitor comprises a coating on the reference electrode (22).

**11.** The gas sensor of Claim 1, wherein the sensor comprises greater than or equal to 1 x $10^{-21}$ atoms per cubic centimeter of the inhibitor.

**12.** The gas sensor of Claim 1, wherein the first catalytic activity is reduced by greater than or equal to about 50%.

**13.** The gas sensor of Claim 12, wherein the first catalytic activity is reduced by greater than or equal to about 80%.

**14.** The gas sensor of Claim 13, wherein the first catalytic activity is reduced by greater than or equal to about 90%.

**15.** The gas sensor of Claim 14, wherein the first catalytic activity is reduced by greater than or equal to about 95%.

**16.** The gas sensor of Claim 15, wherein the first catalytic activity is reduced by 100%.

**17.** A method of making a gas sensor, comprising:

disposing an electrochemical cell comprising an electrolyte (30) in ionic communication with a sensing electrode (20) and a reference electrode (22), wherein the reference electrode (22) comprises an inhibitor that reduces a first catalytic activity with selected sensing gas constituents without substantially affecting a second catalytic activity with oxygen;
disposing a heater (50) in thermal communication with the electrochemical cell to form a sensor; and
heating the sensor.

**18.** The method of Claim 17, wherein the gas constituents are selected from the group consisting of carbon monoxide, nitrogen oxides, hydrogen, hydrocarbons, and combinations comprising at least one of the foregoing gas constituents.

**19.** The method of Claim 17, further comprising disposing the sensing electrode (20) and the reference electrode (22) on opposite sides of the electrolyte (30), wherein the sensing electrode and the reference electrode (22) are in fluid communication with a common gas.

**20.** The method of Claim 17, further comprising disposing the sensing electrode (20) and the reference electrode (22) on a first side of the electrolyte (30).

**21.** The method of Claim 17, wherein the inhibitor is selected from the group consisting of lead, silver, nickel, tin, zinc, copper and combinations comprising at least one of the foregoing inhibitors.

**22.** The method of Claim 21, wherein the inhibitor is lead.

**23.** The method of Claim 21, wherein the inhibitor is silver.

**24.** The method of Claim 17, wherein the inhibitor is disposed over the reference electrode (22) on a side opposite the electrolyte (30).

**25.** The method of Claim 17, wherein the inhibitor is disposed throughout the reference electrode (22).

**26.** The method of Claim 17, wherein the second catalytic activity is affected by less than or equal to about 5%.

**27.** The method of Claim 26, wherein the second catalytic activity is affected by less than or equal to about 1%.

**28.** A method of using a gas sensor, comprising:

exposing a reference electrode (22) and a sensing electrode (20) to a sensing gas, wherein the reference electrode (22) comprises an inhibitor that reduces a first catalytic activity with selected sensing gas constituents without substantially affecting a second catalytic activity with a reference gas;
creating an electromotive force; and
measuring the electromotive force.

**29.** The method of Claim 28, wherein the inhibitor is selected from the group consisting of lead, silver, copper, nickel, zinc, tin and combinations comprising at least one of the foregoing inhibitors.

**30.** The method of Claim 28, wherein the inhibitor is lead.

**31.** The method of Claim 28, wherein the second catalytic activity is affected by less than or equal to about 5%.

**32.** The method of Claim 31, wherein the second catalytic activity is affected by less than or equal to about 1%.

Fig.1.

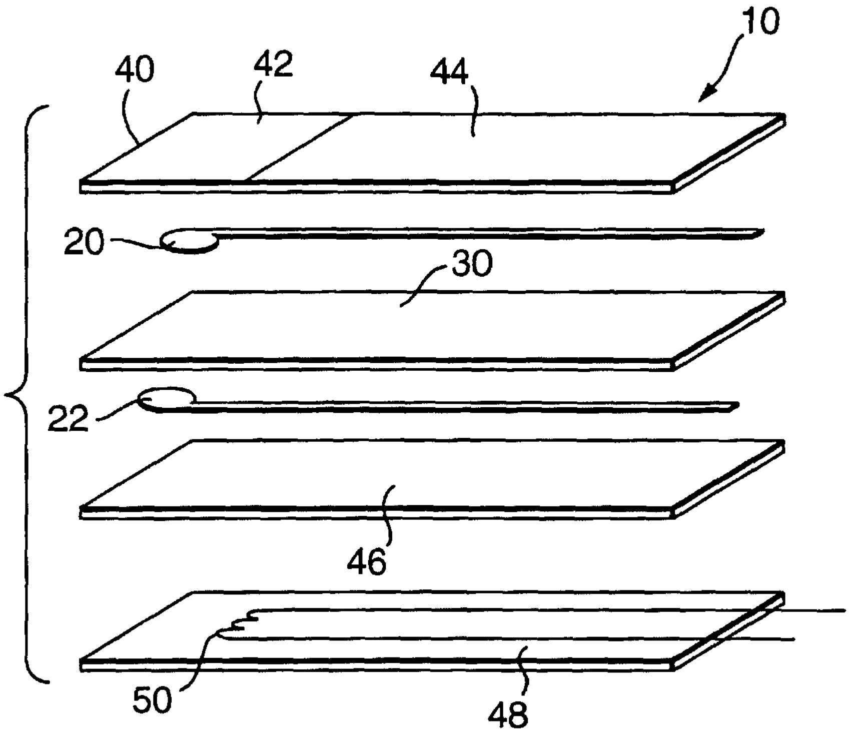


Fig.2.

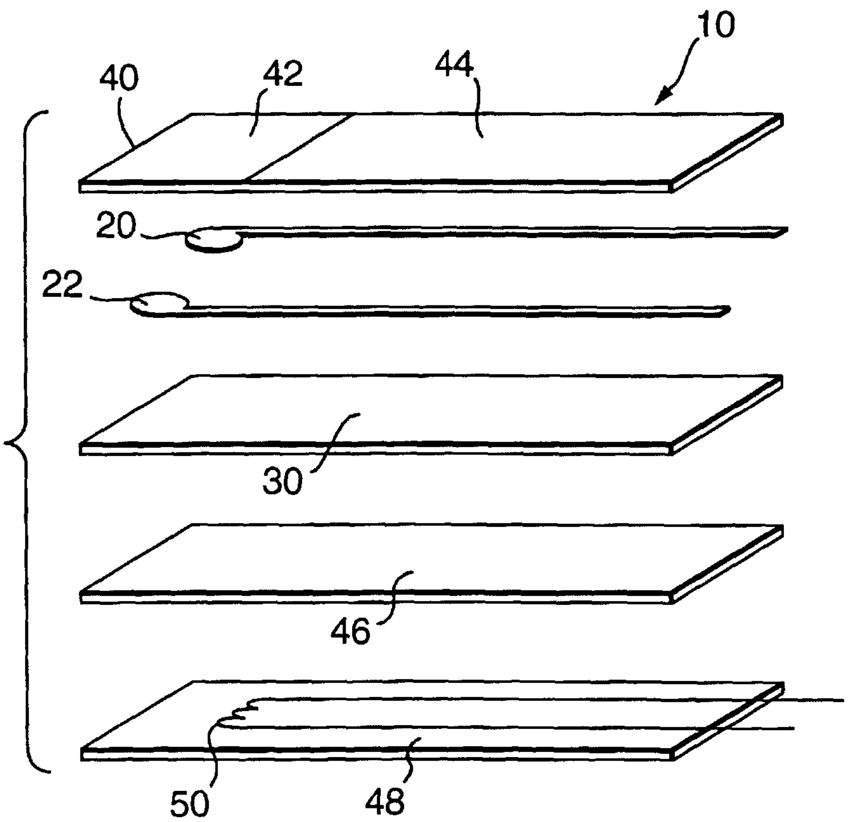

Fig.3.

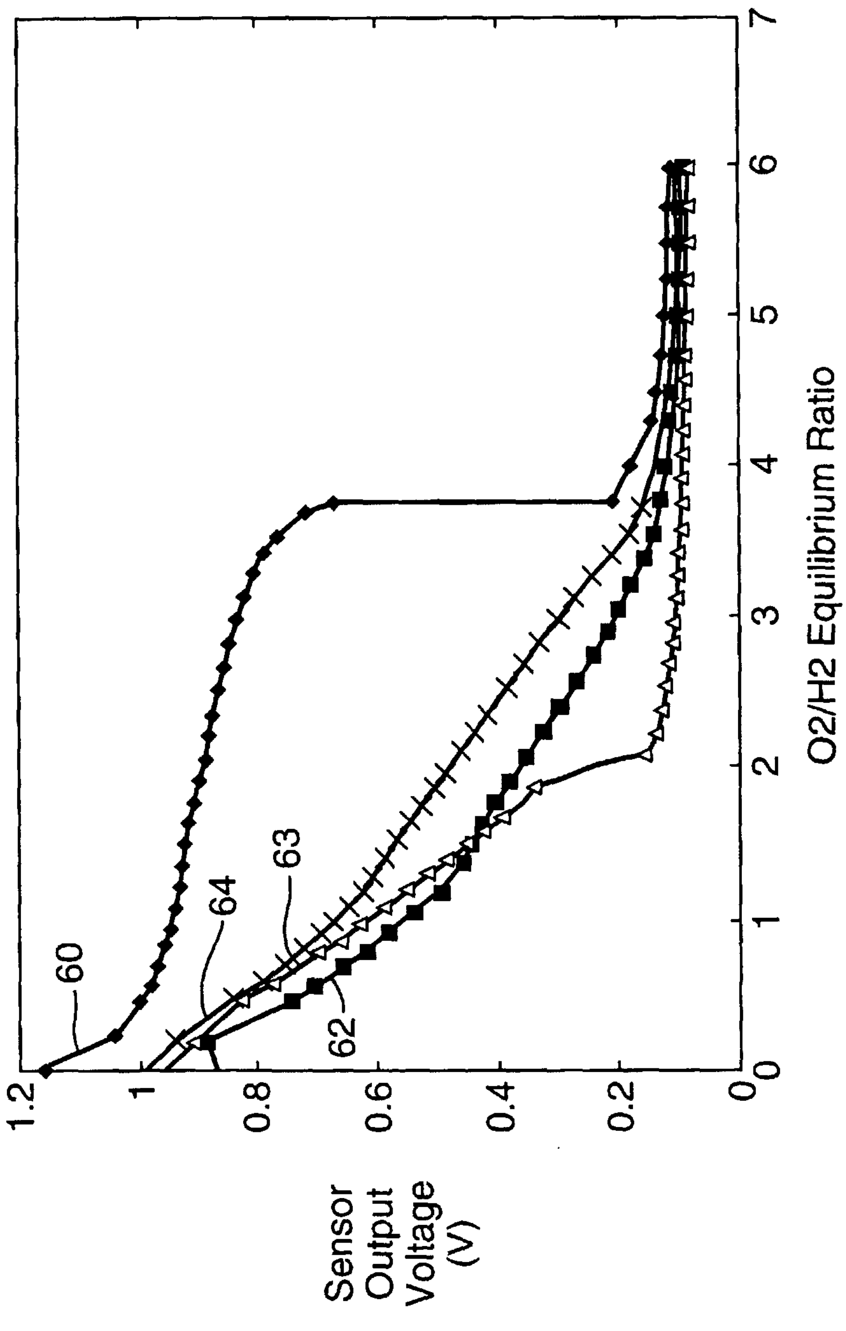
Sensor
Output
Voltage
(V)
1.2
1
0.8
0.6
0.4
0.2
0
0
1
2
3
4
5
6
7
O2/H2 Equilibrium Ratio
60
64
63
62

Fig.4.

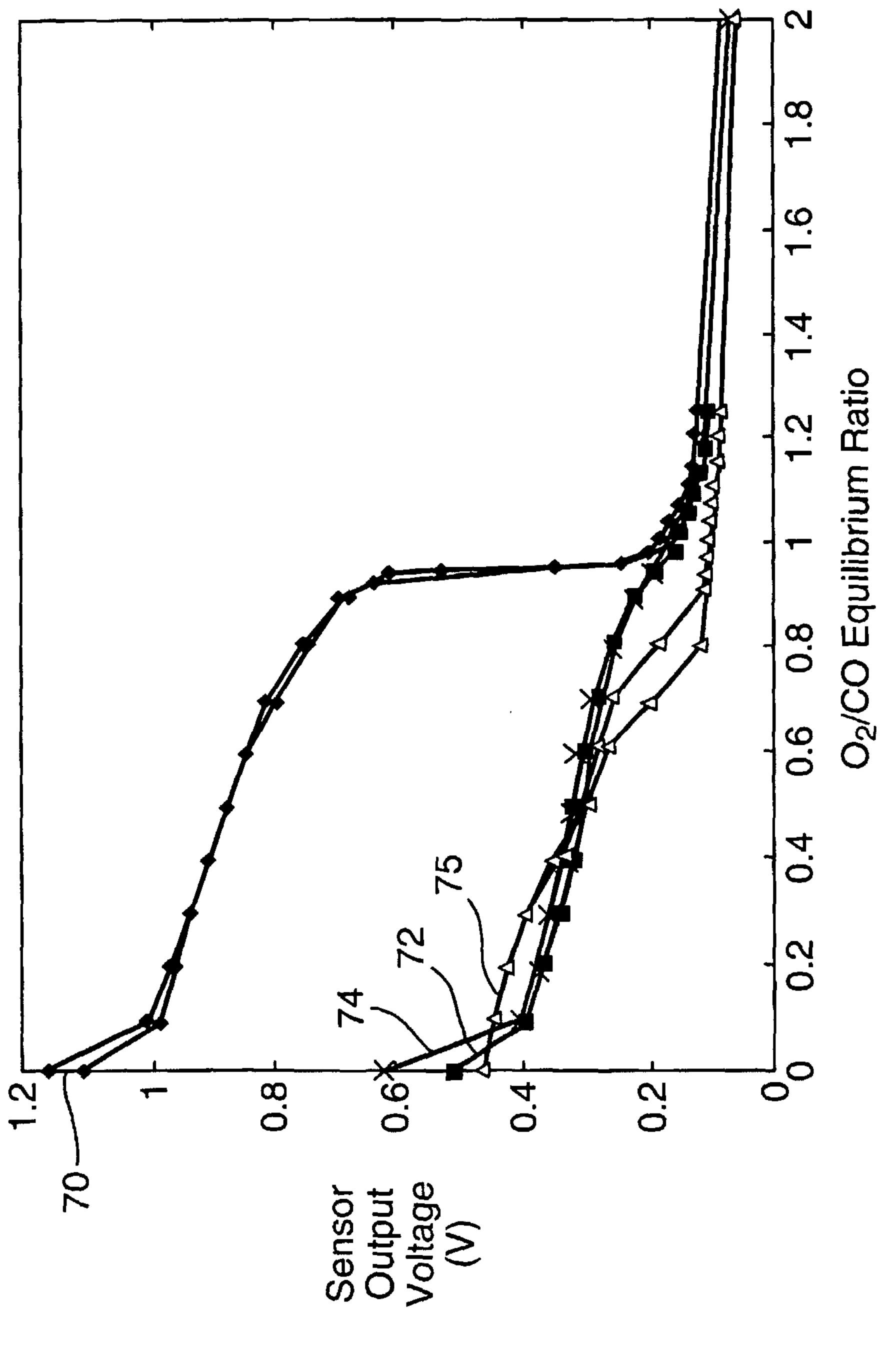
Sensor Output Voltage (V)
1.2
1
0.8
0.6
0.4
0.2
0
O$_2$/CO Equilibrium Ratio
0
0.2
0.4
0.6
0.8
1
1.2
1.4
1.6
1.8
2
70
72
74
75

Fig.5.

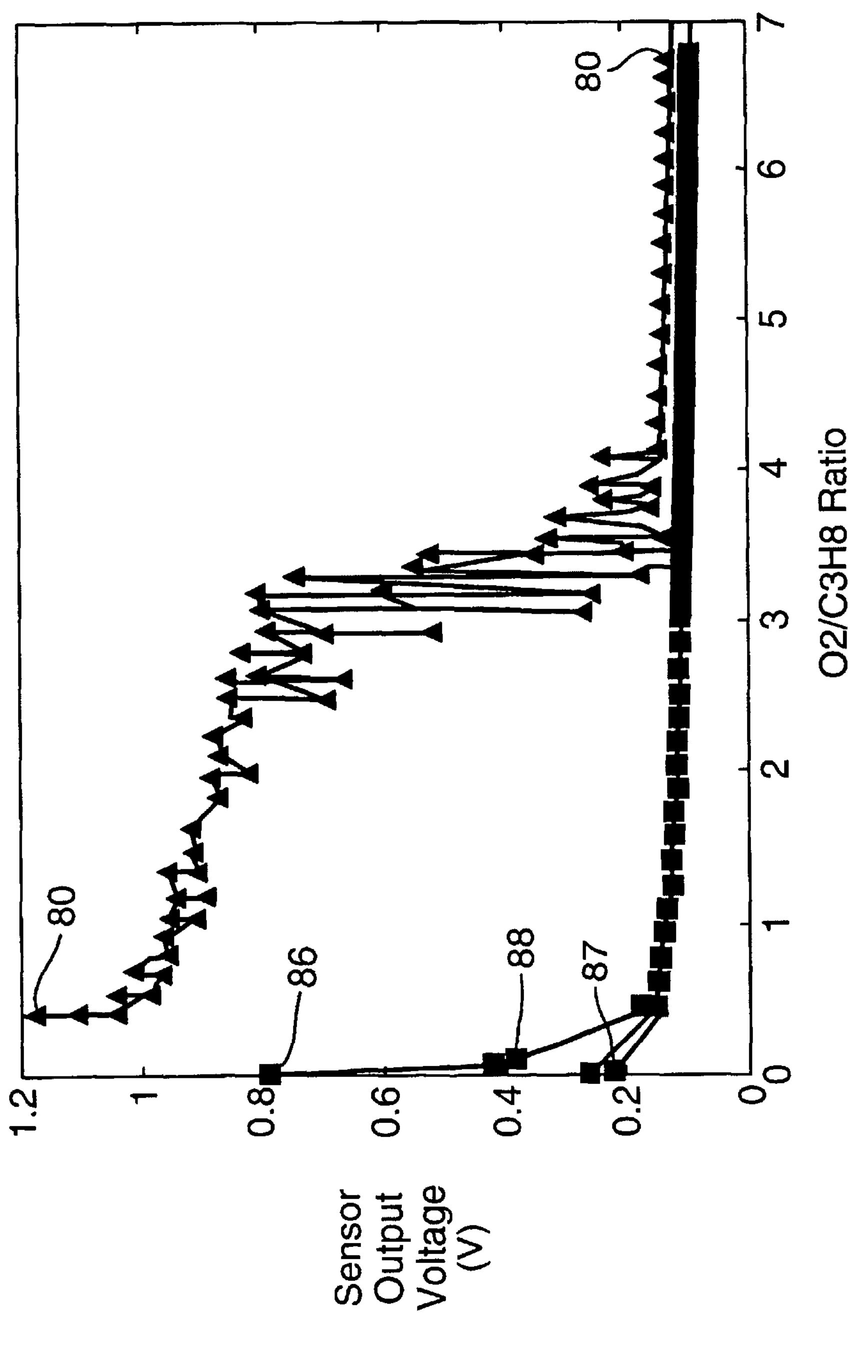
Sensor Output Voltage (V)
0
0.2
0.4
0.6
0.8
1
1.2
0
1
2
3
4
5
6
7
O2/C3H8 Ratio
80
86
88
87
80